# FASCICULE DE BREVET EUROPEEN

(11) **EP 2 354 781 B1**
(45) Date de publication et mention de la délivrance du brevet: **26.07.2017**
(21) Numéro de dépôt: 10195326.3
(22) Date de dépôt: 16.12.2010
(51) Int. Cl.: G01N 19/02

(54) **DISPOSITIF DE MESURE DU DÉGRÉ DE GLISSANCE D'UN SOL**
VORRICHTUNG ZUR BESTIMMUNG DER HAFTREIBUNG EINER FAHRBAHN
DEVICE FOR MEASURING THE DEGREE OF SKIDDING OF A GROUND SURFACE

(30) Priorité: 18.12.2009 FR 0959248
(43) Date de publication de la demande: 10.08.2011
(73) Titulaire: Aeroports de Paris, 75014 Paris (FR)
(72) Inventeur: Martin, Jean, 94150 RUNGIS (FR)
(74) Mandataire: Larger, Solène

(56) Documents cités:
- WO-A1-88/02483
- FR-A1- 2 408 134
- FR-A1- 2 656 099
- US-A1- 2008 060 411
- US-B1- 6 681 614

## Description

### Domaine de l'invention

L'invention est un perfectionnement au brevet FR 2 656 099 se rapportant à un dispositif de mesure du degré de glissance d'un sol, comme une chaussée routière ou une piste d'aéroport, équipé d'une roue de mesure et d'une roue de référence reposant sur le sol, dont les axes sont horizontaux et parallèles et qui entrent en rotation lorsque le dispositif est animé d'un mouvement de progression, la roue de référence tournant librement de façon à rouler sans glissement sur le sol, tandis que la roue de mesure est freinée de telle manière qu'elle roule avec un taux de glissement constant, le degré de glissance du sol étant alors déduit de la mesure de l'effort de freinage appliqué à la roue de mesure.

### Art antérieur

Le dispositif de mesure du brevet précité dont l'apport à été considérable par rapport aux dispositifs antérieurs dans lesquels la force de freinage appliquée à la roue de mesure était obtenue à l'aide d'un moyen mécanique constitué par un frein à disque, asservi de façon à maintenir un taux de glissement constant pour la roue de mesure, présente toutefois encore l'inconvénient de ne pouvoir discerner la présence de contaminants sur le sol objet de cette mesure.

### But et objet de l'invention

L'invention a donc pour but de proposer un dispositif de mesure du genre indiqué permettant en outre de détecter la présence de contaminants sur le sol sur lequel se déplace la roue de mesure.

Ces buts sont atteints par un dispositif perfectionné selon l'invention, équipé d'une roue de mesure et d'une roue de référence, reposant sur le sol et montés toutes deux dans un châssis oscillant articulé par une liaison pivot sur un châssis support équipé de roues porteuses, dont les axes sont horizontaux et parallèles et qui entrent en rotation lorsque le dispositif est animé d'un mouvement de progression, la roue de référence tournant librement de façon à rouler sans glissement sur le sol, tandis que la roue de mesure est freinée à l'aide d'un organe ralentisseur hydraulique de telle manière qu'elle roule avec un taux de glissement constant, le degré de glissance du sol étant déduit de la mesure de l'effort de freinage appliqué à la roue de mesure par un capteur de couple ou un capteur de pression, caractérisé par le fait qu'il comporte en outre, de part et d'autre dudit châssis oscillant, à l'intersection d'un plan horizontal P1 contenant ledit axe de ladite roue de mesure et d'un plan vertical P2 contenant deux axes superposés de ladite liaison pivot, deux capteurs de force pour mesurer une réaction longitudinale s'appliquant sur ladite roue de mesure.

Ainsi, en adjoignant au dispositif la capacité de mesurer la réaction longitudinale s'appliquant sur la roue de mesure, on se donne la possibilité de déterminer également l'épaisseur d'éventuels contaminants recouvrant le sol parcouru par le dispositif.

Dans une forme de réalisation préférée, chacun desdits capteurs de force est interposé, dans ledit plan horizontal P1, entre le pied d'une biellette assurant ladite liaison pivot à deux axes superposés entre lesdits châssis support et oscillant et une partie formant butée dudit châssis support.

Avantageusement, l'effort de freinage appliqué à ladite roue de mesure est mesuré par un capteur de couple interposé dans la chaîne cinématique de couplage en rotation de ladite roue de mesure avec ledit organe ralentisseur hydraulique.

De préférence, le dispositif selon l'invention comporte en outre des moyens de comparaison pour comparer le couple de freinage obtenu par ledit capteur de couple et ladite réaction longitudinale obtenue par lesdits capteurs de force et ainsi quantifier un effort de trainée opposé à l'avancement de la roue de mesure.

D'une manière générale, le dispositif peut être pourvu d'un châssis support autonome, constituant alors une remorque destinée à être attelée à un véhicule tracteur. Il peut aussi être monté à bord d'un véhicule motorisé équipé de roues porteuses, son châssis support étant alors constitué par le châssis de ce véhicule.

### Brève description des dessins

D'autres particularités et avantages de l'invention ressortiront clairement de la description qui va suivre, en regard des dessins annexés, d'un exemple de réalisation non limitatif, sur lesquels :
- la figure 1 représente en plan un dispositif de mesure selon l'invention, capot ôté, le réservoir principal de liquide hydraulique et le châssis qui le porte ayant été enlevés,
- la figure 2 représente schématiquement en vue de côté l'articulation entre le châssis support et le châssis oscillant du dispositif de la figure 1,

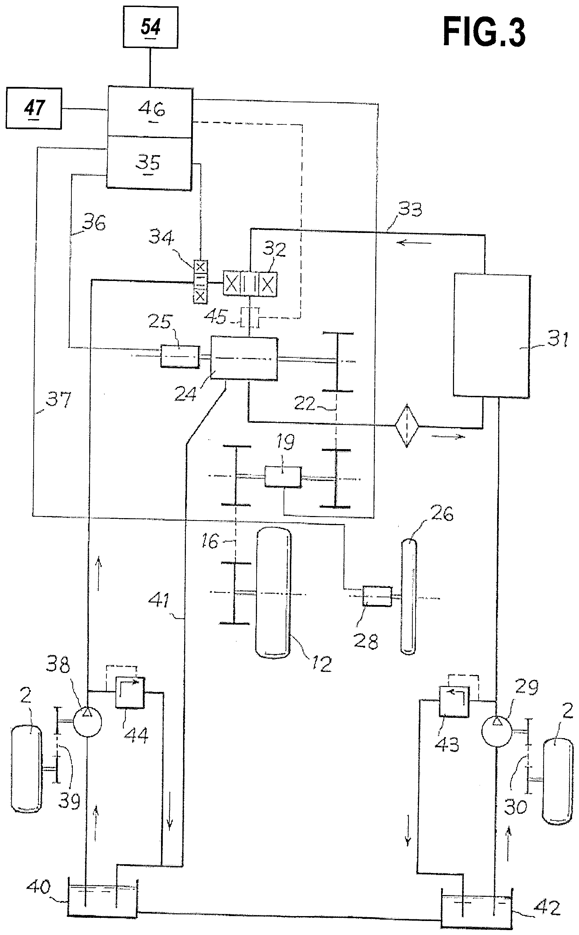

- la figure 3 illustre le schéma hydraulique et électrique mis en oeuvre dans le dispositif de mesure de la figure 1,
- les figures 4A et 4B représentent les efforts mécaniques mis en jeux en cas respectivement d'absence ou de présence d'un contaminant sur le sol parcouru par le dispositif de mesure selon l'invention, et
- la figure 5 montre un exemple de résultat de mesure en présence d'eau.

### Description détaillée de mode(s) de réalisation

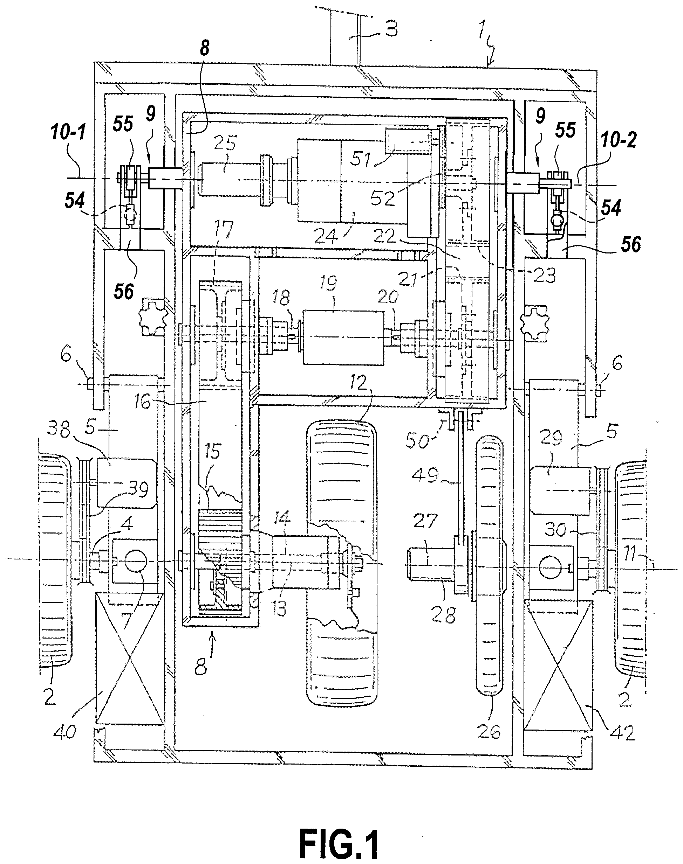

Le dispositif de mesure représenté à la figure 1 offre la forme d'une remorque à essieu unique. Celle-ci comporte, sous un capot non représenté, un châssis support 1 porté par les roues porteuses 2 de cet essieu et solidaire d'un timon central 3 d'accrochage à un véhicule tracteur non représenté. Chaque roue 2 est fixée sur un arbre propre 4 monté sur un bras oscillant 5 qui est relié au châssis 1 par un tourillon horizontal 6 d'articulation. Entre chaque bras oscillant 5 et le châssis est interposé un organe 7 de suspension et d'amortissement. Le châssis 1, en forme de cadre rectangulaire, comporte un large évidement central dans lequel prend place un premier châssis oscillant 8, articulé au châssis support 1, grâce à une liaison pivot à deux axes superposés, l'un 10-1 avec le châssis oscillant 8 et l'autre 10-2 avec le châssis 1, ces deux axes étant disposés dans un plan vertical à l'avant du dispositif, tandis que l'axe 11 de l'essieu porteur des roues 2 est situé à l'arrière.

Dans le châssis 8 est montée, à mi-distance des roues 2, une roue 12 équipée d'un pneu lisse reposant sur le sol, qui tourne autour d'un axe horizontal 13 situé dans le même plan vertical que l'axe 11. La roue 12 est portée par un arbre 14 monté dans le châssis 8 et sur cet arbre est calée une roue dentée 15 couplée, par une courroie crantée 16, à une autre roue dentée 17 calée sur un arbre 18 parallèle à l'arbre 14, tourillonnant dans le châssis 8. Cet arbre 18 est couplé, par l'intermédiaire d'un capteur de couple 19, à un arbre 20 semblablement monté, les deux arbres 18 et 20 étant alignés. Sur l'arbre 20 est calée une roue dentée 21 couplée par une courroie crantée 22 à une autre roue dentée 23 calée sur l'arbre d'un servomoteur hydraulique 24 fixé sur le châssis 8. L'axe de la roue dentée 23 et du servomoteur 24 est confondu avec un des axes d'articulation du châssis 8 au châssis 1. Une dynamo tachymétrique 25 est fixée sur le servomoteur 24, son arbre d'entrée étant couplé à l'arbre de ce dernier.

On notera toutefois que cette configuration ne saurait être limitative et il est clair que par exemple la courroie crantée 16 pourra directement coupler l'arbre 14 à l'arbre du servomoteur hydraulique 24 par l'intermédiaire de la roue dentée 15 et de la roue dentée 23 respectivement. Dans ce cas de figure, le capteur de couple 19 sera inséré sur l'arbre reliant le servomoteur hydraulique 24 à la roue dentée 23. De plus, l'axe de la roue dentée 23 et du servomoteur 24 pourra ne pas être confondu avec un des axes d'articulation du châssis 8 au châssis 1.

Le châssis 8 est d'autre part équipé d'une roue de référence 26, pouvant tourner librement autour de l'axe 27 de son arbre, lequel est relié au châssis 8 par un ressort de suspension (non représenté) et un bras 49 oscillant dans un plan vertical autour d'un axe 50 lié au châssis 8 de façon à imposer à la roue 26 un contact permanent avec le sol, sans rebondissement. L'axe 27 de celle-ci est situé dans le même plan vertical que l'axe 11 de l'essieu porteur. La roue 26, couplée à une dynamo tachymétrique 28, repose sur le sol et tourne en fournissant la référence de vitesse de rotation pour la roue de mesure 12 et permet en outre de mesurer la distance parcourue par la remorque.

Une fois encore, on pourra noter que cette configuration ne saurait être unique et que les roues porteuses 2 pourront également être utilisées comme référence de vitesse de rotation pour la roue de mesure 12 en y couplant sur chacune une dynamo tachymétrique 28, permettant de ce fait de mesurer la distance parcourue par la remorque. Ce système permettra avantageusement d'obtenir une moyenne des vitesses de rotation des deux roues porteuses 2, donnant ainsi une information précise sur la vitesse de référence notamment quand le dispositif se déplace selon une courbe.

Selon l'invention, à l'intersection du plan horizontal P1 contenant l'axe 13 de la roue de mesure 12 et du plan vertical P2 contenant les axes 10-1 et 10-2 ont été disposés de part et d'autre du châssis oscillant 8 deux capteurs de force 54 pour mesurer la réaction longitudinale entre les châssis 1 et 8 et quantifier la force de trainée opposée à l'avancement de la roue de mesure 12. Plus précisément, la liaison entre les deux châssis 1 et 8 est assurée par deux biellettes 55 disposées dans le plan P2, de par et d'autre du châssis 8, et dont une extrémité formant pied de biellette est articulée directement sur ce châssis 8 au niveau de l'axe 10-1 situé dans le plan horizontal P1 et dont l'autre extrémité formant tête de biellette est articulée au châssis 1 au niveau de l'axe 10-2 via un portique 56 support de cette autre extrémité.

Chacun des deux capteurs de force 54 est installé, dans le plan P1 contenant l'axe 13 et l'axe 10-1, entre l'extrémité formant pied de biellette et le portique 56 solidaire du châssis 1 formant butée. Ainsi, toute réaction longitudinale s'appliquant à la roue de mesure 12 se retrouve appliquée directement sur l'axe 10-1 et donc correspond à la somme des forces mesurées par les deux capteurs de force 54.

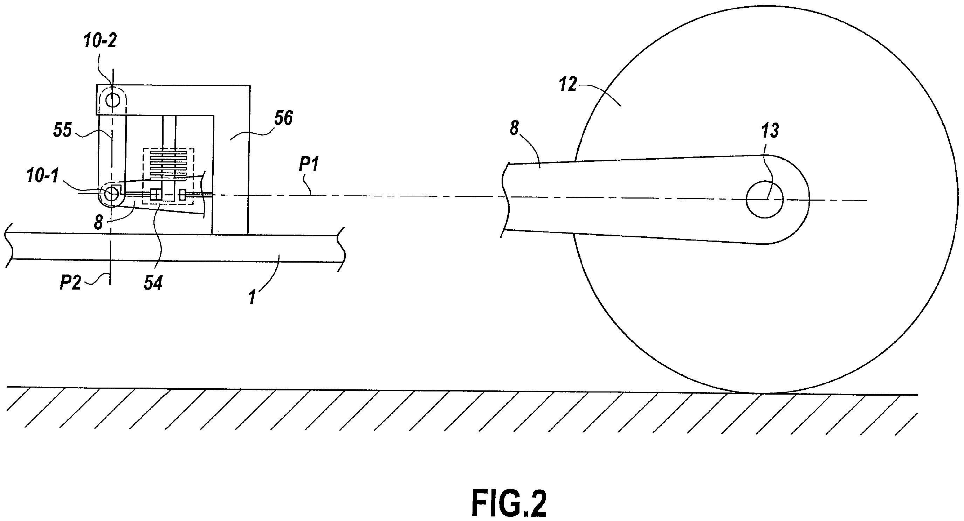

Un exemple de schéma hydraulique et électrique, qui ne saurait être limitatif, mis en oeuvre dans le dispositif est illustré à la figure 2. Un réservoir principal 31 de liquide hydraulique, servant à l'alimentation du servo-moteur 24, est monté sur un deuxième châssis oscillant (non représenté) articulé au châssis 8 suivant un axe parallèle aux axes 10-1 et 10-2 d'articulation du châssis 8 au châssis 1. Le liquide contenu dans ce réservoir est maintenu sous pression (à une valeur limitée à 5 bars par un limiteur de pression 43) par une pompe hydraulique de gavage 29 qu'entraîne l'une des roues 2 par l'intermédiaire de roues dentées et d'une courroie crantée 30. Le réservoir principal 31, qui est composé de deux moitiés disposées symétriquement de part et d'autre de la roue de mesure 12, constitue pour une majeure partie la charge (100 à 200 daN) qui applique celle-ci sur le sol et qui lui est communiquée par l'intermédiaire d'un amortisseur (non représenté) interposé entre le deuxième châssis oscillant et le châssis 8. Quant à la roue de référence 26, aucune charge particulière n'est prévue pour elle. Elle est simplement appliquée au sol par la force relativement faible de son ressort de suspension.

Le servomoteur 24 est commandé par une servovalve 32 interposée sur une conduite hydraulique 33 reliant le servomoteur au réservoir principal 31. Cette servovalve est elle-même commandée, via un étage de pilotage 34, par un module de commande 35 recevant, par des lignes 36, 37, les signaux de mesure fournis par les dynamos tachymétriques 25, 28, représentatifs des vitesses de rotation respectives de la roue de mesure 12 et de la roue de référence 26. L'étage de pilotage 34 est alimenté sous haute pression (ne dépassant pas 100 bars grâce à un limiteur de pression 44) par une pompe hydraulique 38 entraînée, par l'intermédiaire de roues dentées et d'une courroie crantée 39, par la roue porteuse 2 symétrique de celle qui entraîne la pompe de gavage 29. Cette pompe 38 est alimentée en liquide hydraulique par un réservoir auxiliaire 40, auquel aboutit par ailleurs un drain 41 en provenance du servomoteur 24. Symétriquement au réservoir 40 est monté sur le châssis 1 un autre réservoir auxiliaire 42 semblable, qui assure l'alimentation de la pompe de gavage 29.

Pour parfaire le fonctionnement du système, eu égard aux caractéristiques du moteur hydraulique, qui présente inévitablement un couple résistant résiduel en circuit ouvert, et compte tenu des possibilités d'utilisation du dispositif de mesure dans des pays réputés pour leurs conditions climatiques sévères, il a été prévu d'installer dans la chaîne cinématique un moteur hydraulique 51 de puissance réduite pour compenser le couple résistant précité dans le cas où le coefficient de frottement mesuré est inférieur à 0,15. Ce moteur est couplé à la sortie d'arbre du servomoteur principal 24 via un moyen de transmission mécanique 52 (voir la figurel).

Pour faire une mesure du degré de glissance d'un sol, on fait progresser à vitesse constante la remorque attelée à un véhicule tracteur. La roue de référence 26, tournant librement, roule sans glisser sur le sol et sa vitesse, proportionnelle à la vitesse de progression de la remorque, est fournie par la génératrice tachymétrique 28 au module de commande 35. Par contre, la roue de mesure 12 roule également sur le sol, mais avec glissement, étant freinée par le servomoteur 24 auquel elle est reliée par la chaîne cinématique précédemment décrite. Le degré de freinage de cette roue est gouverné par le module de commande 35 qui agit sur la servovalve 32, par l'intermédiaire de l'étage de pilotage 34, de façon que le servomoteur applique à la roue 12 un couple de freinage tel que la différence relative des vitesses de rotation de cette roue et de la roue de référence 26, fournies au module de commande 35 par les génératrices tachymétriques 25 et 28, soit maintenue à une valeur appropriée constante, quel que soit l'état de glissance du sol.

En pratique, le taux de glissement de la roue 12 est choisi aux environs de 15 %, valeur qui correspond au maximum du coefficient de frottement d'une roue freinée sur une chaussée mouillée. Par réglage du module de commande, il est aisé d'obtenir le maintien du taux de glissement à toute valeur désirée, ainsi que de tenir compte de toute diminution du diamètre de la roue de mesure due à son usure.

La mesure du coefficient de frottement couple est alors fournie par le capteur de couple 19 inséré dans la chaîne cinématique reliant la roue de mesure 12 au servomoteur 24. Ce capteur délivre en effet un signal représentant le couple de freinage infligé par le servomoteur à la roue 12 pour imposer à celle-ci un taux de glissement constant par rapport à la roue de référence 26. Le couple ainsi mesuré permet une détermination directe de ce coefficient de frottement couple, qui est égal au rapport entre la force de frottement de la roue 12 sur le sol, déduite du couple mesuré, et la charge verticale qui s'exerce sur cette roue de mesure. En variante, on peut réaliser une mesure indirecte du couple de freinage produit par le servomoteur 24 à l'aide d'un capteur de pression 45 installé dans le circuit hydraulique du servomoteur à la sortie de la servovalve 32. La pression hydraulique régnant à cet endroit du circuit est reliée en effet au couple de freinage par une fonction qui peut être déterminée par étalonnage.

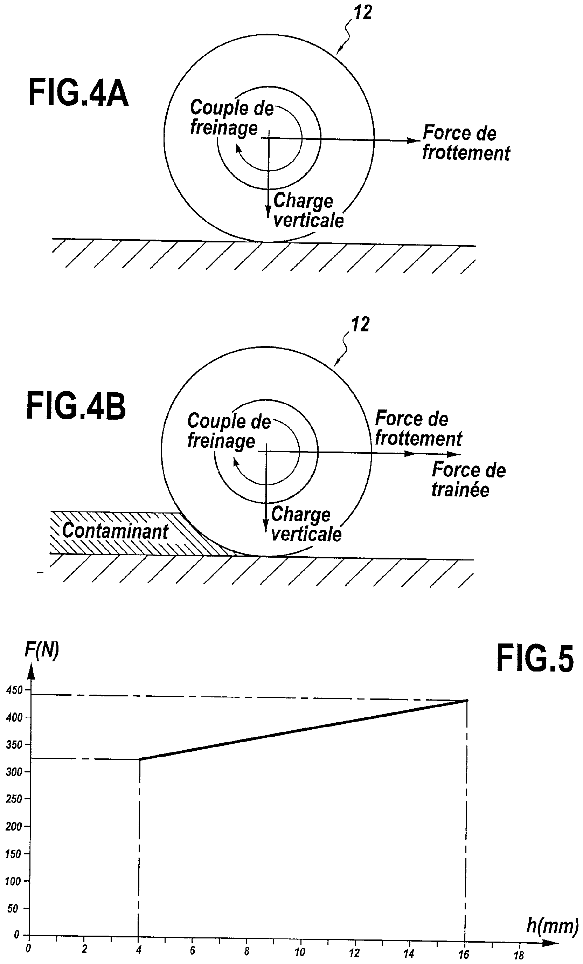

Le coefficient de frottement longitudinal est quand à lui mesuré à l'aide des deux capteurs de force 54 et de la charge verticale s'exerçant sur la roue de mesure. Lorsque le sol ne présente pas de contaminants (neige, eau et/ou mélange neige-eau), ce coefficient de frottement longitudinal est égal au coefficient de frottement couple (figure 4A). Par contre, en présence de tels contaminants sur le sol parcouru par le dispositif de mesure, il est mesuré une différence entre ces deux coefficients. Cette différence est due à un effort de trainée créé par le contaminant qui affecte différemment le capteur de couple 19 mesurant le couple de freinage et les capteurs de force 54 mesurant la réaction longitudinale (figure 4B). Ainsi, la comparaison entre cette mesure du couple de freinage et cette mesure de la réaction longitudinale permet de quantifier la force de trainée, opposée à l'avancement de la roue de mesure, et qui est fonction de l'épaisseur du contaminant présent devant cette roue, comme le montre le tableau de la figure 5 qui illustre la hauteur d'eau mesurée en fonction de l'effort de trainée relevé lors du déplacement du dispositif de mesure sur un sol mouillé, ce déplacement étant effectué à 65 km/h avec un taux de glissement de 15% appliquée à la roue de mesure.

Le signal de mesure fourni soit par le capteur de couple 19, soit par le capteur de pression 45, et les signaux de mesure issus des capteurs de force 54 sont appliqués à un module électronique de conditionnement 46 comportant les moyens de comparaison précisés et qui, au travers d'un module de communication filaire ou radio 47, par exemple de type WiFi, les adresse à un dispositif informatique externe pour exploitation. Le module électronique de conditionnement 46 pourra également communiquer les signaux en provenance des dynamos tachymétriques 28 et 25.

Le dispositif décrit, réalisé sous la forme d'une remorque, est également susceptible d'être intégré dans un véhicule porteur motorisé. Dans cette variante, le châssis support 1 est supprimé, le châssis du véhicule porteur en assurant alors la fonction. Seul subsiste donc le châssis 8 qui est alors articulé au châssis lié du véhicule porteur dans les mêmes conditions qu'au châssis support 1 de la remorque, c'est-à-dire via des biellettes de liaison 55. Suivant le type de véhicule utilisé et l'existence ou l'inexistence d'un pont arrière, la roue de mesure 12 et la roue de référence 26 auront leur axe horizontal situé ou non situé dans le plan vertical passant par l'axe des roues arrière du véhicule porteur. Quant aux éléments mécaniques et hydrauliques nécessaires au fonctionnement du servomoteur hydraulique 24 et de la servovalve hydraulique 32, ils sont installés sur le véhicule et actionnés par le moteur de celui-ci.

## Revendications

1. Dispositif perfectionné de mesure du degré de glissance d'un sol, équipé d'une roue de mesure (12) et d'une roue de référence (26), reposant sur le sol et montés toutes deux dans un châssis oscillant (8) articulé par une liaison pivot sur un châssis support (1) équipé de roues porteuses (2), dont les axes (13, 27) sont horizontaux et parallèles et qui entrent en rotation lorsque le dispositif est animé d'un mouvement de progression, la roue de référence tournant librement de façon à rouler sans glissement sur le sol, tandis que la roue de mesure est freinée à l'aide d'un organe ralentisseur hydraulique (24) de telle manière qu'elle roule avec un taux de glissement constant, le degré de glissance du sol étant déduit de la mesure de l'effort de freinage appliqué à la roue de mesure par un capteur de couple (19) ou un capteur de pression (45), **caractérisé par le fait qu'**il comporte en outre, de part et d'autre dudit châssis oscillant, à l'intersection d'un plan horizontal P1 contenant ledit axe (13) de ladite roue de mesure et d'un plan vertical P2 contenant deux axes superposés (10-1, 12-2) de ladite liaison pivot, deux capteurs de force (54) pour mesurer une réaction longitudinale s'appliquant sur ladite roue de mesure.

2. Dispositif selon la revendication 1, **caractérisé en ce que** chacun desdits capteurs de force est interposé, dans ledit plan horizontal P1, entre le pied d'une biellette (55) assurant entre lesdits châssis support et oscillant ladite liaison pivot à deux axes superposés et une partie formant butée (56) dudit châssis support.

3. Dispositif selon la revendication 1, **caractérisé en ce que** l'effort de freinage appliqué à ladite roue de mesure est mesuré par un capteur de couple (19) interposé dans la chaîne cinématique de couplage en rotation de ladite roue de mesure avec ledit organe ralentisseur hydraulique.

4. Dispositif selon la revendication 2 et la revendication 3, **caractérisé en ce qu'**il comporte en outre des moyens de comparaison (46) pour comparer le couple de freinage obtenu par ledit capteur de couple et ladite réaction longitudinale obtenue par lesdits capteurs de force et ainsi quantifier un effort de trainée opposé à l'avancement de la roue de mesure.

5. Dispositif selon l'une quelconque des revendications 1 à 4, **caractérisé en ce que** ledit châssis support étant autonome, il constitue une remorque destinée à être attelée à un véhicule tracteur.

6. Dispositif selon l'une quelconque des revendications 1 à 4, **caractérisé en ce qu'**il est monté à bord d'un véhicule motorisé équipé de roues porteuses, son châssis support étant constitué par le châssis de ce véhicule motorisé.

## Patentansprüche

1. Perfektionierte Vorrichtung zum Messen des Gleitmaßes eines Bodens, die mit einem Messrad (12) und einem Referenzrad (26) ausgerüstet ist, die auf dem Boden aufliegen und beide in einem Schwingrahmen (8) montiert sind, der durch eine Drehzapfen-Verbindung an einem Tragrahmen (1) angelenkt ist, der mit Laufrädern (2) ausgerüstet ist, deren Achsen (13, 27) horizontal und parallel sind und die in Drehung versetzt werden, wenn die Vorrichtung in eine Vorwärtsbewegung versetzt wird, wobei sich das Referenzrad frei dreht, um schlupffrei auf dem Boden zu rollen, während das Messrad mithilfe eines hydraulischen Bremsorgans (24) gebremst wird, sodass es mit einer konstanten Schlupfrate rollt, wobei das Gleitmaß des Bodens von der Messung der Bremskraft, die am Messrad angelegt wird, durch einen Drehmomentsensor (19) oder einen Drucksensor (45) abgeleitet wird, durch die Tatsache gekennzeichnet, dass sie darüber hinaus beiderseits des besagten Schwingrahmens am Schnittpunkt einer horizontalen Ebene P1, die die besagte Achse (13) des besagten Messrades enthält und einer vertikalen Ebene P2, die zwei überlagerte Achsen (10-1, 12-2) der besagten Drehzapfen-Verbindung enthält, zwei Kraftsensoren (54) zum Messen einer Längsreaktion umfasst, die am besagten Messrad angelegt wird.

2. Vorrichtung nach Anspruch 1, **dadurch gekennzeichnet, dass** jeder der besagten Kraftsensoren auf der besagten horizontalen Ebene P1 zwischen dem kleinen Auge eines Schwingarmes (55), der zwischen den besagten Trag- und Schwingrahmen für die besagte Drehzapfen-Verbindung mit zwei überlagerten Achsen sorgt, und einem Abschnitt eingesetzt ist, der einen Anschlag (56) des besagten Tragrahmens bildet.

3. Vorrichtung nach Anspruch 1, **dadurch gekennzeichnet, dass** die auf das besagte Messrad angelegte Bremskraft durch einen Drehmomentsensor (19) gemessen wird, der in der kinematischen Kette zur drehschlüssigen Verbindung des besagten Messrades mit dem besagten hydraulischen Bremsorgan eingesetzt ist.

4. Vorrichtung nach Anspruch 2 und Anspruch 3, **dadurch gekennzeichnet, dass** sie darüber hinaus Vergleichsmittel (46) zum Vergleichen des Bremsmoments, das man vom besagten Drehmomentsensor erhält, und der besagten Längsreaktion umfasst, die man von den besagten Kraftsensoren erhält, und somit zum Quantifizieren einer Schleppkraft, die sich dem Fortgang des Messrades entgegensetzt.

5. Vorrichtung nach einem der Ansprüche 1 bis 4, **dadurch gekennzeichnet, dass** sie, da der Tragrahmen autonom ist, einen Anhänger bildet, der dazu bestimmt ist, an ein Zugfahrzeug angehängt zu werden.

6. Vorrichtung nach einem der Ansprüche 1 bis 4, **dadurch gekennzeichnet, dass** sie an Bord eines motorisierten Fahrzeugs montiert ist, das mit Laufrädern ausgerüstet ist, wobei ihr Tragrahmen durch den Rahmen dieses motorisierten Fahrzeugs gebildet wird.

## Claims

1. An improved device for measuring the degree of slipperiness of a ground, equipped with a measuring wheel (12) and a reference wheel (26), resting on the ground and both mounted in an oscillating frame (8) hinged by a pivot link on a support frame (1) equipped with carrier wheels (2), whose axes (13, 27) are horizontal and parallel and which rotate when the device is moved by a forward movement, the reference wheel rotating freely so as to roll without slipping on the ground, while the measuring wheel is braked by means of a hydraulic retarder member (24) in such a way that it rolls with a constant slip rate, the degree of slipperiness of the ground being deduced from the measurement of the braking force applied to the measuring wheel by a torque sensor (19) or a pressure sensor (45), **characterized in that** it further includes, on either side of said oscillating frame, at the intersection of a horizontal plane P1 containing said axis (13) of said measuring wheel and of a vertical plane P2 containing two superposed axes (10-1,12-2) of said pivot link, two force sensors (54) for measuring a longitudinal reaction applied on said measuring wheel.

2. The device according to claim 1, **characterized in that** each of said force sensors is interposed, in said horizontal plane P1, between the foot of a tie rod (55) ensuring between said support frame and oscillating said pivot link with two superimposed axes and a portion forming a stop (56) of said support frame.

3. The device according to claim 1, **characterized in that** the braking force applied to said measuring wheel is measured by a torque sensor (19) interposed in the kinematic chain for coupling in rotation said measuring wheel with said hydraulic retarder member.

4. The device according to claims 2 and 3, **characterized in that** further includes comparison means (46) for comparing the braking torque obtained by said torque sensor and said longitudinal reaction obtained by said force sensors and thus quantifying a drag force opposite to the progress of the measuring wheel.

5. The device according to any one of claims 1 to 4, **characterized in that** said support frame is autonomous, it constitutes a trailer intended to be coupled to a towing vehicle.

6. The device according to any one of claims 1 to 4, **characterized in that** it is mounted onboard a motor vehicle equipped with carrier wheels, its support frame being constituted by the frame of this motorized vehicle.
